# EUROPEAN PATENT APPLICATION

(11) **EP 4 357 822 A1**
(43) Date of publication of application: **24.04.2024**
(21) Application number: 22836586.2
(22) Date of filing: 06.05.2022
(51) Int. Cl.: G02B 6/08, G02B 6/26, G02B 6/40

(54) **OPTICAL FIBER PLATE STRUCTURE AND MANUFACTURING METHOD THEREFOR, OPTICAL FIBER INTERCONNECTION PLATE, AND FIBER ARRANGEMENT DEVICE**

(30) Priority: 09.07.2021 CN 202110777928
(71) Applicant: Huawei Technologies Co., Ltd., Shenzhen, Guangdong 518129 (CN)
(72) Inventor: CHEN, Tianhai, Shenzhen, Guangdong 518129 (CN); FAN, Huizhong, Shenzhen, Guangdong 518129 (CN)
(74) Representative: Huawei European IPR
(86) International application number: PCT/CN2022/091138
(87) International publication number: WO 2023/279828

(57) **Abstract**

An optical fiber board structure, a manufacturing method of an optical fiber board structure, an optical fiber interconnection board, an optical communication device, and a fiber disposing device are provided. The optical fiber board structure is used for an optical fiber connection between optical communication boards, or used for an optical fiber connection between an optical chip on an optical communication board and an optical connector. The optical fiber board structure (1) includes: M optical fiber layers (10). The M optical fiber layers (10) are stacked along a thickness direction of the optical fiber layers. Each optical fiber layer (10) includes a plurality of optical fibers (11). Every two of the plurality of optical fibers (11) are arranged side by side, or at least some optical fibers (11) are arranged in a cross manner. Herein, M is a positive integer greater than or equal to 2. The optical fiber board structure and the optical fiber interconnection board provided in this application have relatively high optical fiber layout density.

## Description

This application claims priority to Chinese Patent Application No. 202110777928.0, filed with the China National Intellectual Property Administration on July 9, 2021, and entitled "OPTICAL FIBER BOARD STRUCTURE AND MANUFACTURING METHOD THEREOF, OPTICAL FIBER INTERCONNECTION BOARD, AND FIBER DISPOSING DEVICE", which is incorporated herein by reference in its entirety.

### TECHNICAL FIELD

This application relates to the field of optical fiber communication technologies, and in particular, to an optical fiber board structure, a manufacturing method of an optical fiber board structure, an optical fiber interconnection board, an optical communication device, and a fiber disposing device.

### BACKGROUND

With rapid development of technologies such as a high-definition video (for example, a 4K/8K video) and AR/VR, people have increasingly high requirements for a capacity of a communication network. An optical communication technology using an optical fiber as a communication medium has advantages of a long transmission distance, a large transmission bandwidth, and low transmission energy consumption. Therefore, the optical communication technology becomes a key technology in a future communication network. For example, a 5th generation fixed communication network (Fifth-Generation Fixed Network, F5G) will be a communication network that uses all optical fiber communication.

An optical fiber interconnection board (also referred to as an "optical fiber board") is an important component in an optical communication network. For example, in an optical cross-connect (Optical cross-connect, OXC) scenario, the optical fiber board may be configured to implement an optical fiber connection between communication modules in a data exchange device (for example, a routing device); and in a chip out-light scenario, the optical fiber board may be configured to implement an optical fiber connection between an optical chip and an optical connector of a same communication module.

A future optical communication device has a development trend of high integration, a large capacity, and miniaturization. This requires the optical fiber board to have higher optical fiber layout density. Currently, the optical fiber layout density in the optical fiber board cannot meet the requirement.

### SUMMARY

Some implementations of this application provide an optical fiber board structure, an optical fiber interconnection board, a manufacturing method of an optical fiber interconnection board, an optical communication device, and a fiber disposing device. The following describes this application from a plurality of aspects. For implementations and beneficial effects of the following plurality of aspects, refer to each other.

According to a first aspect, an implementation of this application provides an optical fiber board structure. The optical fiber board structure is used for an optical fiber connection between optical communication boards, or used for an optical fiber connection between an optical chip on an optical communication board and an optical connector. The optical fiber board structure includes: M optical fiber layers. The M optical fiber layers are stacked along a thickness direction of the optical fiber layers. Each optical fiber layer includes a plurality of optical fibers. Every two of the plurality of optical fibers are arranged side by side, or at least some optical fibers are arranged in a cross manner. Herein, M is a positive integer greater than or equal to 2.

In an implementation of this application, in the optical fiber board structure, a quantity of optical fiber layers is two or any quantity greater than two. In other words, an unlimited quantity of optical fiber layers may be disposed in a same optical fiber board. In this way, the quantity of optical fibers in the optical fiber board may not be restricted by an area of a substrate, to improve optical fiber layout density in the optical fiber board.

In addition, in this implementation of this application, every two optical fibers in each optical fiber layer may be arranged side by side, or some or all optical fibers may be arranged in a cross manner with other optical fibers. In this way, in this implementation of this application, optical fibers have relatively high arrangement flexibility, to meet optical fiber connection requirements in different application scenarios.

In some implementations, the optical fiber board structure further includes a connecting part, and the M optical fiber layers are fixedly connected by using the connecting part.

In this implementation, the plurality of optical fiber layers are fixedly connected to each other, and the optical fiber layers may strengthen each other. In this way, the optical fiber layer can maintain a stable shape based on a structure of the optical fiber layer, and the optical fiber board can also maintain a stable shape without depending on the substrate. Therefore, in some embodiments, the optical fiber board may not include the substrate. In this way, a volume of the optical fiber board can be further reduced, to improve optical fiber layout density of the optical fiber board.

In some implementations, the connecting part is a first adhesive material, and the first adhesive material fills a gap between optical fibers in the M optical fiber layers.

In this implementation, the first adhesive material is formed as a continuous entity filling the gap between the optical fibers in the M optical fiber layers, to separate and fasten the optical fibers, thereby maintaining a stable shape of the optical fiber board.

In some implementations, the connecting part is a first adhesive material, and the first adhesive material wraps outer surfaces of the optical fibers in the M optical fiber layers, so that optical fibers in a same optical fiber layer and optical fibers in adjacent optical fiber layers are fixedly connected by using the first adhesive material.

In this implementation, the first adhesive material wraps the outer surfaces of the optical fibers, so that the optical fiber board structure can be manufactured by using a relatively convenient process. For example, the first adhesive material may be attached to the outer surfaces of the optical fibers by passing the optical fibers through an adhesive box that accommodates the first adhesive material.

In addition, in this implementation, provided that the surfaces of the optical fibers are wrapped with the first adhesive material, there may be a gap region between the optical fibers. In other words, the first adhesive material in the optical fiber board structure may not be a continuous solid entity structure, but may have a hollow part. In this way, in this implementation, a weight of the optical fiber board structure can be reduced, to facilitate lightweight of the optical fiber board.

In some implementations, the connecting part includes a first connecting part and a second connecting part, a plurality of optical fibers in a same optical fiber layer are fixedly connected by using the first connecting part, and different optical fiber layers are fixedly connected by using the second connecting part.

In this implementation, the optical fibers in the same optical fiber layer are fastened in a manner different from that used for fastening the optical fiber layers. In this way, the optical fiber layers may be independently and synchronously manufactured. After the optical fiber layers are manufactured, the plurality of independent optical fiber layers are fixedly connected by using the second fastening part, to improve efficiency of manufacturing the optical fiber board structure.

In some implementations, the first connecting part is the first adhesive material.

In some implementations, the second connecting part is a solid-state adhesive product disposed between adjacent optical fiber layers. In this implementation, the optical fiber layers may be independently and synchronously manufactured. After the optical fiber layers are manufactured, the plurality of independent optical fiber layers are fixedly connected by using the solid-state adhesive product (for example, a double-sided tap), to improve efficiency of manufacturing the optical fiber board structure. Because the solid-state adhesive product is usually a product that can be directly purchased, the efficiency of manufacturing the optical fiber board structure can be further improved, and the manufacturing costs of the optical fiber board structure can be reduced.

In addition, because the solid-state adhesive product has a specific volume and rigidity, the solid-state adhesive product disposed between adjacent optical fiber layers may separate and connect the adjacent optical fiber layers. In addition, the adjacent optical fiber layers may support each other by using the solid-state adhesive product, to ensure that the optical fiber board structure has a stable shape.

In some implementations, the second connecting part is a clamping mechanism (for example, a hoop or a clamping housing) disposed outside the M optical fiber layers. In this implementation, after the optical fiber layers are independently manufactured, the M optical fiber layers are clamped by using the clamping mechanism. In other words, a fixed connection between the M optical fiber layers can be implemented, to improve efficiency of manufacturing the optical fiber board structure.

In some implementations, the first adhesive material is a pressure-sensitive adhesive. Because the pressure-sensitive adhesive is pressure-sensitive, a fixed connection between optical fibers can be reliably implemented under pressure of a fiber disposing wheel. In other words, the optical fiber board structure provided in this implementation has relatively good manufacturability.

In some implementations, the optical fiber board structure further includes an upper cover, the upper cover is adjacent to and connected to an M* optical fiber layer in the M optical fiber layers, and the upper cover at least partially fills a gap between optical fibers in the M^{th} optical fiber layer.

In this implementation, the upper cover covers the M* optical fiber layer, to protect the optical fiber layers. In addition, the upper cover at least partially fills the gap between the optical fibers in the M^{th} optical fiber layer, so that the upper cover can separate and fasten the optical fibers. In this way, there is the fixed gap and a fixed relative position relationship between the optical fibers, so that the optical fiber board structure has a stable shape.

In some implementations, a material of the upper cover is a second adhesive. In this way, the second adhesive may be formed by using an adhesive layer spraying process, so that the optical fiber board structure provided in this embodiment has relatively good manufacturability.

According to a second aspect, an implementation of this application provides a manufacturing method of an optical fiber board structure, including: disposing a plurality of first optical fibers on a first surface of a substrate; coating the plurality of first optical fibers with a first layer of first adhesive material, where the first layer of first adhesive material covers upper surfaces of the plurality of first optical fibers; and disposing a plurality of second optical fibers on the first layer of first adhesive material, and bonding the plurality of second optical fibers to the first layer of first adhesive material.

An optical fiber board manufactured in this implementation of this application has a relatively small volume and relatively high optical fiber layout density.

In some implementations, the coating the plurality of first optical fibers with a first layer of first adhesive material includes: coating the plurality of first optical fibers with the first adhesive material in a form of forming an upper surface of the first layer of first adhesive material as a horizontal surface.

In this implementation of this application, a fiber disposing wheel can apply constant downward pressure on the optical fibers.

In some implementations, the first adhesive material is a pressure-sensitive adhesive, and the bonding the plurality of second optical fibers to the first layer of first adhesive material includes: disposing the plurality of second optical fibers on the first layer of first adhesive material in a semi-cured state of the first layer of first adhesive material; and in a process of disposing the plurality of second optical fibers, applying a downward pressure to the plurality of second optical fibers, so that the plurality of second optical fibers are bonded to the first layer of first adhesive material.

In some implementations, the manufacturing method further includes: coating a plurality of N^{th} optical fibers with an N^{th} layer of first adhesive material, where the N^{th} layer of first adhesive material covers upper surfaces of the plurality of N^{th} optical fibers; and disposing a plurality of (N+1)^{th} optical fibers on the N^{th} layer of first adhesive material, and bonding the plurality of (N+1)^{th} optical fibers to the N^{th} layer of first adhesive material, where N is a positive integer that is sequentially obtained from 2 to M-1 in ascending order, and M is a positive integer greater than or equal to 3.

In some implementations, after the bonding the plurality of (N+1)^{th} optical fibers to the N^{th} layer of first adhesive material, the method further includes: disposing a second adhesive on the plurality of (N+1)^{th} optical fibers, where the second adhesive covers upper surfaces of the plurality of (N+1)^{th} optical fibers.

In some implementations, the first surface of the substrate is a pressure-sensitive adhesive layer covering a substrate body of the substrate, and the method further includes: stripping the substrate body of the substrate from the pressure-sensitive adhesive layer of the substrate.

In this implementation of this application, a volume of the optical fiber board is further reduced.

According to a third aspect, an implementation of this application provides a manufacturing method of an optical fiber board structure, including: disposing, on a first surface of a substrate, a plurality of first optical fibers whose surfaces are covered by a first adhesive material; and disposing, on the plurality of first optical fibers, a plurality of second optical fibers whose surfaces are covered by the first adhesive material, and bonding the plurality of second optical fibers to the plurality of first optical fibers by using the first adhesive material on the surfaces of the first optical fibers and the first adhesive material on the surfaces of the second optical fibers.

An optical fiber board manufactured in this implementation of this application has a relatively small volume and relatively high optical fiber layout density.

In some implementations, the first adhesive material is a photocuring adhesive, and the disposing, on a first surface of a substrate, a plurality of first optical fibers whose surfaces are covered by a first adhesive material includes: passing the plurality of first optical fibers through an adhesive box accommodating a liquid-state first adhesive material, so that the first adhesive material is attached to the surfaces of the plurality of first optical fibers; irradiating, by using an ultraviolet ray, the liquid-state first adhesive material attached to the surfaces of the plurality of first optical fibers, so that the liquid-state first adhesive material is semi-cured; and disposing, on the first surface of the substrate, the plurality of first optical fibers whose surfaces are attached with the semi-cured first adhesive material.

In this implementation of this application, steps of manufacturing an optical fiber board can be simplified, to improve efficiency of manufacturing the optical fiber board.

In some implementations, the disposing, on the plurality of first optical fibers, a plurality of second optical fibers whose surfaces are covered by the first adhesive material includes: disposing the plurality of second optical fibers on the plurality of first optical fibers, when the first adhesive material on the surfaces of the plurality of first optical fibers is in a cured or semi-cured state, and the first adhesive material on the surfaces of the plurality of second optical fibers is in the semi-cured state.

In some implementations, the manufacturing method further includes: disposing, on a plurality of N^{th} optical fibers, a plurality of (N+1)^{th} optical fibers whose surfaces are covered by the first adhesive material, and bonding the plurality of (N+1)^{th} optical fibers to the plurality of N^{th} optical fibers by using the first adhesive material on the surfaces of the N^{th} optical fibers and the first adhesive material on the surfaces of the (N+1)^{th} optical fiber, where N is a positive integer that is sequentially obtained from 2 to M-1 in ascending order, and M is a positive integer greater than or equal to 3.

In some implementations, the first adhesive material is a pressure-sensitive adhesive, and the method further includes: stripping the substrate from the plurality of first optical fibers.

In this implementation of this application, a volume of an optical fiber board is further reduced, to improve optical fiber layout density in the optical fiber board.

According to a fourth aspect, this application provides a manufacturing method of an optical fiber board structure, including: separately forming each of M optical fiber layers, where M is a positive integer greater than or equal to 2, and each of the M optical fiber layers includes a plurality of first optical fibers that are laid on a plane, and an adhesive covering outer surfaces of the plurality of first optical fibers; and fixedly connecting the M optical fiber layers by using a fastening apparatus.

An optical fiber board manufactured in this implementation of this application has a relatively small volume and relatively high optical fiber layout density.

In some implementations, the separately forming each of M optical fiber layers includes: forming an N^{th} optical fiber layer, where N is a positive integer that is obtained from 1 to M in ascending order; and the forming an N^{th} optical fiber layer includes: disposing a plurality of N^{th} optical fibers on a first surface of a substrate, where the first surface of the substrate is a pressure-sensitive adhesive layer covering a substrate body of the substrate; coating the plurality of N^{th} optical fibers with a first adhesive material, where the first adhesive material covers upper surfaces of the plurality of N^{th} optical fibers; and stripping a substrate body of the substrate from the pressure-sensitive adhesive layer of the substrate to form the N^{th} optical fiber layer.

According to a fifth aspect, an implementation of this application provides an optical fiber interconnection board. The optical fiber interconnection board includes a substrate and the optical fiber board structure according to any one of the implementations of the first aspect of this application, or includes an optical fiber board structure obtained by using the manufacturing method of an optical fiber board structure according to any one of the implementations of the second aspect, any one of the implementations of the third aspect, or any one of the implementations of the fifth aspect. The substrate is adjacent to and connected to a first optical fiber layer in M optical fiber layers of the optical fiber board structure. For beneficial effects that can be achieved in the fifth aspect, refer to the beneficial effects of any one of the implementations of the first aspect, any one of the implementations of the second aspect, any one of the implementations of the third aspect, or any one of the implementations of the fourth aspect of this application. Details are not described herein again.

In addition, in this implementation of this application, the substrate may strengthen the optical fiber board structure, so that the optical fiber interconnection board can have a more stable shape.

In some implementations, the substrate includes a back adhesive layer, and the substrate is adj acent to and connected to the first optical fiber layer by using the back adhesive layer. Because the substrate with a back adhesive is usually a product that can be directly purchased in the market, in this implementation, a manufacturing process of the optical fiber interconnection board can be simplified, to reduce the manufacturing costs of the optical fiber interconnection board.

According to a sixth aspect, an implementation of this application provides an optical communication device (for example, a routing device, a general communication device in an OXC system, or a data center). The optical communication device includes the optical fiber board structure according to any implementation of the first aspect of this application, or includes the optical fiber interconnection board according to any implementation of the fifth aspect of this application.

When the optical fiber board structure included in this implementation of this application has relatively high fiber layout density and a relatively small volume, the optical communication device provided in this implementation of this application may also have a miniaturization advantage. In addition, for beneficial effects that can be achieved in the sixth aspect, refer to the beneficial effects of any one of the implementations of the first aspect or any one of the implementations of the fifth aspect of this application. Details are not described herein again.

According to a seventh aspect, an implementation of this application provides a fiber disposing device, including: a rack; a fiber spool wheel and a fiber disposing wheel that are disposed on the rack, where the fiber spool wheel and the fiber disposing wheel are configured to wind a to-be-disposed optical fiber, and in a fiber disposing process of the fiber disposing device, the to-be-disposed optical fiber is transported from the fiber spool wheel to the fiber disposing wheel along a first path; and an adhesive box, where the adhesive box includes an adhesive receptacle, and the adhesive receptacle is disposed on the first path, so that the to-be-disposed optical fiber at least partially passes through the adhesive receptacle when being transported along the first path.

By using the fiber disposing device provided in this implementation of this application, a manufacturing process of an optical fiber board can be simplified, to improve efficiency of manufacturing the optical fiber board.

In some implementations, the first path passes through the adhesive receptacle.

In some implementations, the adhesive receptacle is configured to accommodate a first adhesive material, and a surface that is of the fiber disposing wheel and that is used to wind the to-be-disposed optical fiber is an anti-adhesive surface that can avoid bonding of the first adhesive material.

In some implementations, the fiber disposing device further includes: an ultraviolet lamp, where the ultraviolet lamp is configured to irradiate an ultraviolet ray at a first position on the first path; and along a transport direction of the to-be-disposed optical fiber, the first position is located downstream of a position of the adhesive receptacle.

By using the fiber disposing device provided in this implementation of this application, a manufacturing process of an optical fiber board can be simplified, to improve efficiency of manufacturing the optical fiber board.

### BRIEF DESCRIPTION OF DRAWINGS

FIG. 1a is a diagram of an example structure of an optical communication device according to an implementation of this application;
FIG. 1b is a diagram of a partial structure in FIG. 1a;
FIG. 2a is a diagram of an example structure of an optical fiber board according to this application;
FIG. 2b shows a scenario in which the optical fiber board shown in FIG. 2b is used in an optical communication device;
FIG. 3 is a diagram of an example structure of another optical fiber board according to this application;
FIG. 4 is a schematic diagram of a first region of outer surfaces of optical fibers according to an implementation of this application;
FIG. 5 is a diagram of an example structure of an optical fiber board according to an embodiment of this application;
FIG. 6 shows a scenario in which an optical fiber board is used in an optical communication device according to an embodiment of this application;
FIG. 7 is a schematic diagram of an optical fiber arrangement manner according to an embodiment of this application;
FIG. 8 is a diagram of an example structure of a fiber disposing device according to an embodiment of this application;
FIG. 9 is a schematic flowchart 1 of a manufacturing method of an optical fiber board according to an embodiment of this application;
FIG. 10 is a schematic flowchart 2 of a manufacturing method of an optical fiber board according to an embodiment of this application;
FIG. 11a is a diagram 1 of an example structure of an optical fiber board according to another embodiment of this application;
FIG. 11b is a diagram 2 of an example structure of an optical fiber board according to another embodiment of this application;
FIG. 12 is a diagram 1 of an example structure of a fiber disposing device according to another embodiment of this application;
FIG. 13a is a diagram 2 of an example structure of a fiber disposing device according to another embodiment of this application;
FIG. 13b is a diagram 3 of an example structure of a fiber disposing device according to another embodiment of this application;
FIG. 14 is a schematic flowchart 1 of a manufacturing method of an optical fiber board according to another embodiment of this application;
FIG. 15 is a schematic flowchart 2 of a manufacturing method of an optical fiber board according to another embodiment of this application;
FIG. 16 is a diagram of an example structure of an optical fiber board according to still another embodiment of this application;
FIG. 17 is a schematic flowchart 1 of a manufacturing method of an optical fiber board according to still another embodiment of this application; and
FIG. 18 is a schematic flowchart 2 of a manufacturing method of an optical fiber board according to still another embodiment of this application.

### DESCRIPTION OF EMBODIMENTS

The following describes embodiments of this application in detail with reference to the accompanying drawings.

Implementations of this application are used to provide an optical fiber board with relatively high optical fiber layout density. Implementations of this application are further used to provide an optical communication device, including an optical fiber interconnection board (also referred to as an "optical fiber board") provided in this application. The optical communication device may be various devices that need to perform communication by using an optical fiber, for example, a communication device in an OXC system (for example, a wavelength division OXC system), a hub device (for example, a routing device) in a mobile network, or a data center of a terminal. This is not limited in this application.

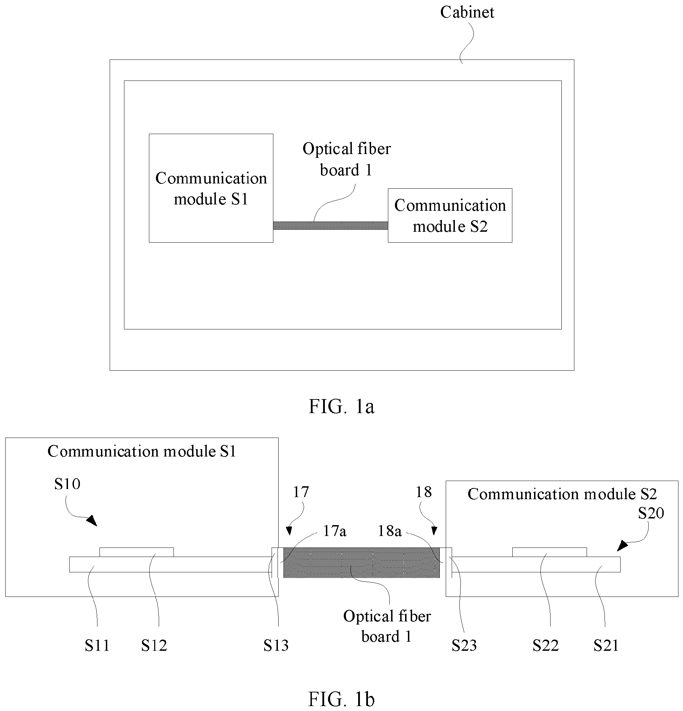

FIG. 1a is a diagram of an example structure of an optical communication device according to this application. With reference to FIG. 1a, the optical communication device includes a cabinet, and a communication module S1 and a communication module S2 that are disposed inside the cabinet. The communication module S1 and the communication module S2 exchange communication data through exchanging optical signals.

To implement data exchange between the communication module S1 and the communication module S2, a large quantity of optical fibers need to be disposed between the communication module S1 and the communication module S2. To avoid a disorder cabling state of the large quantity of optical fibers when the optical fibers are disposed, the communication module S1 and the communication module S2 are connected through an optical fiber board 1. To be specific, the optical fiber board 1 may restrict a plurality of optical fibers in fixed space, to regulate routing of the optical fibers. By disposing the optical fiber board 1, not only cabling inside the cabinet of the optical communication device can be orderly implemented, but also damage caused due to irregular cabling can be avoided.

FIG. 1b is a diagram of an example structure of the communication module S1 and the communication module S2. With reference to FIG. 1b, the communication module S1 includes an optical communication board S10. The optical communication board S10 includes a PCB substrate S11, and an optical chip S12 and an optical connector S13 that are disposed on the PCB substrate S11. The communication module S2 includes an optical communication board S20. The optical communication board S20 includes a PCB substrate S21, and an optical chip S22 and an optical connector S23 that are disposed on the PCB substrate S21.

Two connecting ends 17 and 18 of the optical fiber board 1 are respectively connected to the optical connector S13 and the optical connector S23, to implement an optical fiber connection between the optical communication board S10 and the optical communication board S20, thereby implementing an optical fiber connection between the communication module S1 and the communication module S2. For example, an optical connector 17a is disposed on the connecting end 17 of the optical fiber board 1, and the optical connector 17a is connected to the optical connector S22 in an insertion manner, to implement an optical fiber connection between the optical fiber board 1 and the optical communication board S10; and an optical connector 18a is disposed on the connecting end 18 of the optical fiber board 1, and the optical connector 18a is connected to the optical connector S23 in an insertion manner, to implement an optical fiber connection between the optical fiber board 1 and the optical communication board S20.

In addition, the scenarios shown in FIG. 1a and FIG. 1b are optical cross-connect scenarios. To be specific, the optical fiber board 1 is configured to connect the two optical communication boards in the optical communication device. However, this application is not limited thereto. For example, in another embodiment, the optical fiber board 1 may be used in a chip out-light scenario of an optical communication board. To be specific, the optical fiber board 1 is configured to connect an optical chip and an optical connector on the optical communication board, to implement chip out-light of the optical chip. For example, the optical fiber board 1 may be configured to connect the optical chip S12 and the optical connector S13 in the optical communication board S10 in FIG. 1b, to implement chip out-light of the optical chip S12.

The optical fiber board 1 includes a plurality of optical fibers. Each optical fiber forms one optical channel. Therefore, through the optical fiber board 1, a plurality of channels of optical connections may be implemented for the communication module S1 and the communication module S2. With a continuous increase of a data capacity of a network, a quantity of optical fibers in the optical fiber board continuously increases accordingly. According to a miniaturization requirement of the device, a volume of the optical fiber board needs to be reduced. Based on the foregoing two factors, optical fiber layout density in the optical fiber board needs to be improved. In the conventional technologies, the optical fiber layout density in the optical fiber board cannot meet the requirement.

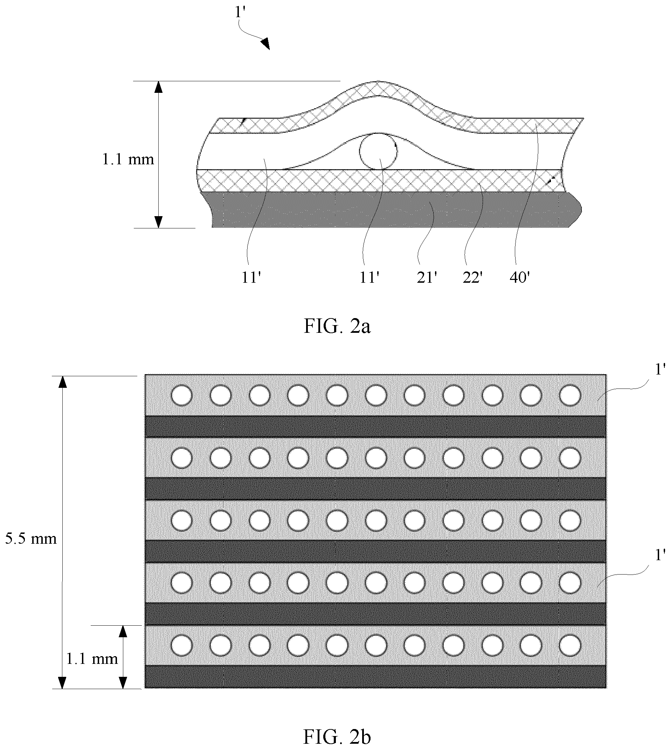

FIG. 2a shows a structure of an optical fiber board 1'. With reference to FIG. 2a, the optical fiber board 1' includes an optical fiber 11' (two cross optical fibers 11' in the figure), a substrate 21', an adhesive layer 22', and a protective adhesive 40'. The optical fiber 11' is connected to the substrate 21' through the adhesive layer 22'. The protective adhesive 40' covers the optical fiber 11' to protect the optical fiber 11' (for example, moisture-proof and dust-proof). In the optical fiber board 1', the substrate 21' may strengthen a structure of the optical fiber board 1', so that the optical fiber board 1' can maintain a stable shape. It may be understood that, in the optical fiber board 1', a quantity of optical fibers 11' is closely related to an area of the substrate 21'. Therefore, the quantity of optical fibers 11' is limited by the area of the substrate 21'. In this case, density of the optical fibers is relatively low.

FIG. 2b shows a scenario in which the optical fiber board 1' is used in the optical communication device shown in FIG. 1. To implement a communication connection between the communication module S1 and the communication module S2, five optical fiber boards 1' need to be stacked. With reference to FIG. 2a and FIG. 2b, a thickness of each optical fiber board 1' is 1.1 mm, and a total thickness of five optical fiber boards 1' is 5 x 1.1 mm = 5.5 mm.

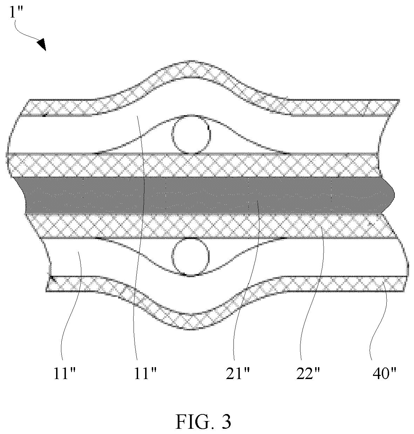

FIG. 3 shows a structure of another optical fiber board 1". Different from the structure shown in FIG. 2a, the optical fiber board 1" includes two layers of optical fibers 11". The two layers of optical fibers 11" are respectively located on an upper surface and a lower surface of a substrate 21". In a double-layer fiber disposing manner, optical fiber layout density in the optical fiber board 1" may be 0.5 times to 1 time higher than that in the optical fiber board 1' in FIG. 2a. However, in the optical fiber board 1", a quantity of optical fibers 11" is still limited by an area of the substrate 21". In this case, density of the optical fibers is still relatively low.

Therefore, an implementation of this application provides an optical fiber board, to improve optical fiber layout density in the optical fiber board. In this application, the optical fiber board includes M optical fiber layers (M is a positive integer greater than or equal to 2) that are fixedly connected to each other, and the M optical fiber layers are stacked along a thickness direction (as a first direction) of the optical fiber board. Each optical fiber layer includes a plurality of optical fibers. The plurality of optical fibers are laid on a plane perpendicular to the thickness direction.

In this application, the M optical fiber layers are fixedly connected by using a connecting part. In some implementations, the connecting part is an adhesive configured to connect optical fiber layers, and optical fibers in a same optical fiber layer and/or adjacent optical fiber layers are fixedly connected by using the adhesive, so that the M optical fiber layers are fixedly connected. In some other embodiments, the connecting part includes a solid-state adhesive product (for example, a double-sided tap that serves as the first connecting part) disposed between adjacent optical fiber layers, and the adjacent optical fiber layers are fixedly connected by using the solid-state adhesive product, so that the M optical fiber layers are fixedly connected. In some other implementations, the connecting part further includes a clamping mechanism (for example, a hoop or a clamping housing that is disposed outside the M optical fiber layers and that serves as a second connecting part) disposed outside the M optical fiber layers.

According to the optical fiber board provided in this implementation of this application, the quantity M of optical fiber layers is any integer greater than or equal to 2. In other words, an unlimited quantity of optical fiber layers may be disposed in the optical fiber board. In this way, a quantity of optical fibers in the optical fiber board may not be restricted by an area of a substrate, to improve optical fiber layout density in the optical fiber board.

Further, in this implementation of this application, the plurality of optical fiber layers are fixedly connected to each other, and the optical fiber layers may strengthen each other. In this way, the optical fiber layer can maintain a stable shape based on a structure of the optical fiber layer, and the optical fiber board can also maintain a stable shape without depending on the substrate. Therefore, in some embodiments, the optical fiber board may not include the substrate. In this way, a volume of the optical fiber board can be further reduced, to improve optical fiber layout density of the optical fiber board.

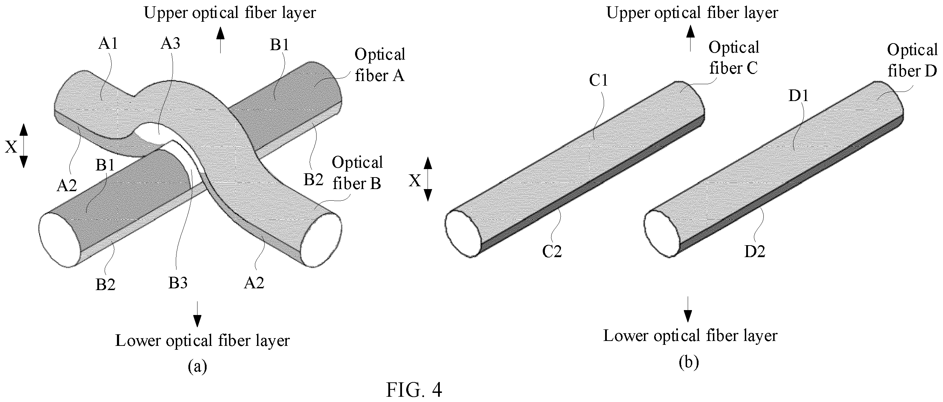

In some implementations of this application, an outer surface of each optical fiber in the optical fiber layer is covered by an adhesive, and the adhesive covers at least a region F (as a first region) of the outer surface of each optical fiber. The region F is a region that is of the outer surface of the optical fiber and that faces an adjacent optical fiber layer. The following provides a definition of the region F with reference to FIG. 4.

FIG. 4(a) shows two cross optical fibers in a specific optical fiber layer, and the two optical fibers are respectively an optical fiber A and an optical fiber B. FIG. 4(a) shows different regions of outer surfaces of the optical fibers by using different colors.

An outer surface of the optical fiber A includes a region A1, a region A2, and a region A3. A region F at the outer surface of the optical fiber A includes the region A1 and the region A2. The region A1 is a region that is of the optical fiber A and that faces an upper optical fiber layer (a region that directly faces the upper optical fiber layer along a thickness direction (an X direction shown in the figure) of an optical fiber board). The region A2 is a region that is of the optical fiber A and that faces a lower optical fiber layer (a region that directly faces the lower optical fiber layer along the thickness direction of the optical fiber board). The region F of the optical fiber A does not include the region A3, because the region A3 is a region that is of the outer surface of the optical fiber A and that faces the optical fiber B (that is, the optical fiber at the same layer).

An outer surface of the optical fiber B includes a region B 1, a region B2, and a region B3. A region F of the outer surface of the optical fiber B includes the region B1 and the region B2. The region B1 is a region that is of the outer surface of the optical fiber B and that faces the upper optical fiber layer. The region B2 is a region that is of the outer surface of the optical fiber B and that faces the lower optical fiber layer. The region F of the optical fiber B does not include the region B3, because the region B3 is a region that is of the outer surface of the optical fiber B and that faces the optical fiber A (that is, the optical fiber at the same layer).

FIG. 4(b) shows two spaced optical fibers in an optical fiber layer, and the two optical fibers are respectively an optical fiber C and an optical fiber D. An outer surface of the optical fiber C includes a region C1 and a region C2. The region C1 is a region that is of the optical fiber C and that faces an upper optical fiber layer. The region C2 is a region that is of the optical fiber C and that faces a lower optical fiber layer. Therefore, a region F of the outer surface of the optical fiber C includes the region C1 and the region C2 (that is, all regions of the outer surface of the optical fiber C). Similarly, an outer surface of the optical fiber D includes a region D1 and a region D2. The region D1 is a region that is of the optical fiber D and that faces the upper optical fiber layer. The region D2 is a region that is of the optical fiber D and that faces the lower optical fiber layer. Therefore, a region F of the outer surface of the optical fiber D includes the region D1 and the region D2 (that is, all regions of the outer surface of the optical fiber D).

In an implementation of this application, the adhesive covers at least the region F of the outer surface of each optical fiber. On this basis, an actual coverage region of the adhesive is not limited in this application. For example, in some embodiments, the adhesive covers only the region F of the outer surface of each optical fiber. In some embodiments, the adhesive covers all regions of the outer surface of each optical fiber (for example, for the optical fiber A, the adhesive covers the region A1+the region A2+the region A3). In some embodiments, in addition to the outer surface of each optical fiber, the adhesive further covers a gap region between optical fibers.

The following describes specific embodiments of this application. In the following embodiments, a structure of the optical fiber board is described by using an example in which the quantity M of optical fiber layers is equal to 5. However, this application is not limited thereto. In another embodiment, M may be any quantity greater than 2. For example, M=2, 3, 5, 10, or 15. Herein, M may be specifically determined according to an actual requirement.

### Embodiment 1

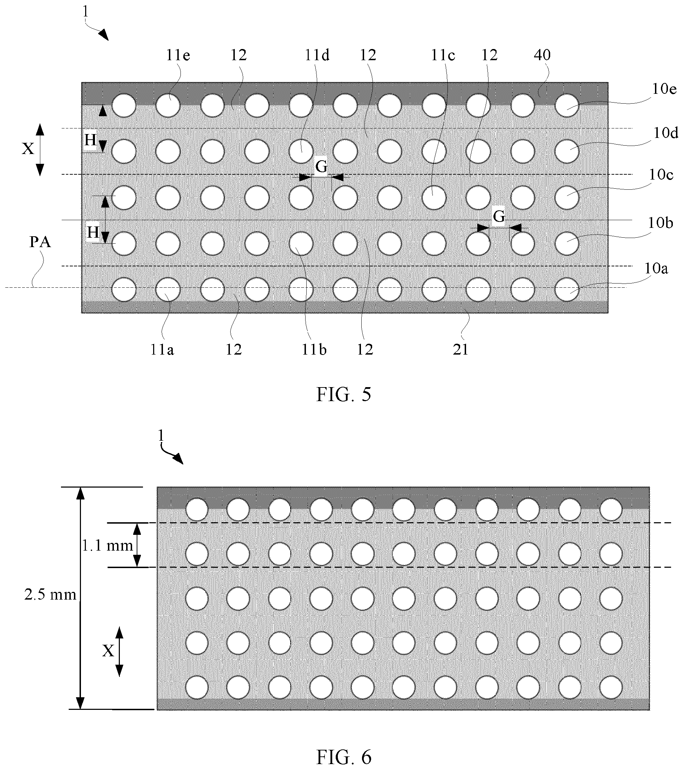

This embodiment is used to provide an optical fiber board. FIG. 5 is a diagram of an example structure of an optical fiber board 1 according to an embodiment. With reference to FIG. 5, the optical fiber board 1 includes five optical fiber layers 10. The five optical fiber layers 10 are respectively optical fiber layers 10a to 10e. The five optical fiber layers 10 are sequentially arranged along a thickness direction (an X direction shown in the figure, used as a first direction) of the optical fiber board 1.

It should be noted that, in this specification, lower-case letters in reference numerals of the "optical fiber layers" and "optical fibers" respectively represent layer numbers of the "optical fiber layers" and the "optical fibers". For example, a reference numeral "10b" of an optical fiber layer 10b indicates that the optical fiber layer is a second optical fiber layer. When the layer numbers do not need to be distinguished, the lower-case letters in the reference numerals of the optical fiber layers 10/optical fibers 11 are omitted.

Each optical fiber layer 10 includes a plurality of optical fibers 11. The plurality of optical fibers 11 in a same optical fiber layer 10 are laid on a same plane. The plane is a plane perpendicular to the thickness direction. For example, the optical fiber layer 10a includes a plurality of optical fibers 11a, and the plurality of optical fibers 11a are laid on a plane PA (that is, the plane PA passes through an entity of each optical fiber 11a). Herein, the plane PA is perpendicular to the thickness direction of the optical fiber board 1.

The optical fiber board 1 further includes a connecting part. The connecting part is an adhesive 12 (used as a first adhesive material). In this embodiment, the adhesive 12 covers a region F of an outer surface of each optical fiber 11 and a gap region G between the optical fibers 11. In other words, the adhesive 12 fills gaps between the optical fibers 11 in the five optical fiber layers 10, so that the optical fibers 11 in the five optical fiber layers 10 are bonded to each other. To be specific, any two adjacent optical fiber layers 10 in the five optical fiber layers 10 are fixedly connected by using the adhesive 12, and any two optical fibers 11 in the same optical fiber layer 10 are fixedly connected by using the adhesive 12.

In this way, the adhesive 12 between the five optical fiber layers 10 forms a continuous entity. The optical fibers 11 in the optical fiber board 1 are embedded in the adhesive 12. The adhesive 12 may separate, connect, and fasten the plurality of optical fibers 11 in the same optical fiber layer 10, and may separate, connect, and fasten the optical fibers 11 in the adjacent optical fiber layers 10. In other words, through disposing the adhesive 12, the five optical fiber layers 10 are fixedly connected to each other, and the optical fibers 11 in each optical fiber layer 10 may be fastened in specific positions in the adhesive 12.

Through this setting, a fastening apparatus configured to fasten each optical fiber layer 10 does not need to be additionally disposed in the optical fiber board 1, to simplify the structure of the optical fiber board 1. In addition, there is no other entity between the adjacent optical fiber layers 10 in addition to the adhesive 12. Therefore, a distance between the adjacent optical fiber layers 10 can be reduced, thereby reducing a volume of the optical fiber board 1. For example, a distance H (equivalent to a layer thickness of the optical fiber layer 10) between the adjacent optical fiber layers 10 is 1.5 times to 2.5 times a diameter of the optical fiber 11. For example, when the diameter of the optical fiber 11 is 125 µm, the distance H between the adjacent optical fiber layers 10 is 187.5 µm to 312.5 µm, for example, 187.5 µm, 200 µm, 240 µm, or 312.5 µm.

It may be understood that, in this embodiment, after a product is formed, there is no obvious physical boundary between the adjacent optical fiber layers 10. For ease of understanding, virtual boundaries between the adjacent optical fiber layers 10 are shown by using dashed lines in FIG. 5. For example, a middle plane between two adjacent optical fiber layers 10 (namely, a plane at equal distances from the two optical fiber layers 10) is used as a dividing plane of the two adjacent optical fiber layers 10.

The optical fiber board 1 further includes a protective adhesive 21 and a protective adhesive 40 (used as a second adhesive). The protective adhesive 40 forms an upper cover. The protective adhesive 21 covers a lower surface of the optical fiber layer 10a. The protective adhesive 40 covers an upper surface of the optical fiber layer 10e. The protective adhesive 21 and the protective adhesive 40 are configured to protect each optical fiber layer 10 (for example, moisture-proof and dust-proof). In other words, the protective adhesive 21 and the protective adhesive 40 are outermost entities of the optical fiber board 1, and the optical fiber board 1 does not include another entity located outside the protective adhesive 21 and the protective adhesive 40. Through the setting, the volume of the optical fiber board can be further reduced, thereby improving optical fiber layout density. In addition, materials of the adhesive 11, the adhesive 21, and the adhesive 40 may be the same or may be different. For example, materials of the adhesive 11 and the adhesive 21 are moisture-absorption curing pressure-sensitive adhesives, and a material of the adhesive 40 is a heat-curing pressure-sensitive adhesive.

In conclusion, in the optical fiber board 1 provided in this embodiment, the plurality of optical fiber layers 10 are bonded to each other by using the adhesive 12 covering the optical fibers 11. In this way, each optical fiber layer 10 may have a layer thickness as small as possible. Through this setting, in a case of a same quantity of optical channels (that is, the quantity of optical fibers 11), the volume of the optical fiber board can be significantly reduced, to improve optical fiber layout density of the optical fiber board.

FIG. 6 shows a scenario in which the optical fiber board 1 provided in this embodiment is used in the optical communication device shown in FIG. 1a. In this embodiment, only one optical fiber board 1 is needed to implement the communication connection between the communication module S1 and the communication module S2. For example, a layer thickness of each optical fiber layer 10 in the optical fiber board 1 is 0.3 mm, and a total thickness of the optical fiber board 1 is 2.5 mm. In comparison with a solution in which a plurality of optical fiber boards 1 are stacked in the conventional technologies (with reference to FIG. 2b), in this embodiment, the total thickness of the optical fiber board may be reduced from 5.5 mm to 2.5 mm (reduced by 55%).

The optical fiber board provided in this embodiment is an example for describing the technical solutions of this application. A person skilled in the art may make another variation.

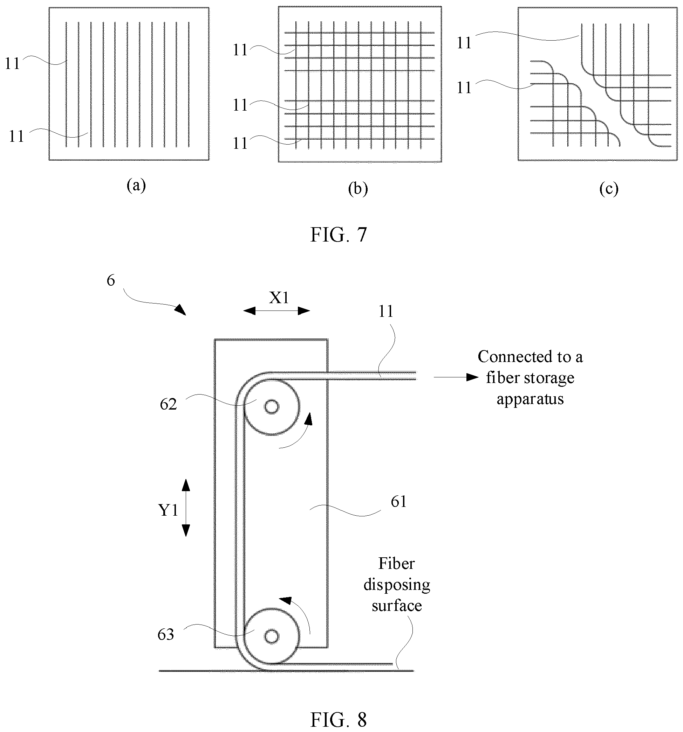

For example, in this embodiment, the optical fibers 11 in the optical fiber layers 10 are disposed in parallel with each other (to be specific, an arrangement manner shown in FIG. 7(a) is used as an example of arranging every two of the plurality of optical fibers side-by-side). However, this application is not limited thereto. In another embodiment, in a same optical fiber layer 10, the optical fibers 11 may be arranged in any manner, for example, a crisscross manner shown in FIG. 7(b), or a cross manner with bent parts shown in FIG. 7(c) (FIG. 7(b) and FIG. 7(c) are used as examples of arranging at least some optical fibers in an intersection manner). In addition, in different optical fiber layers 10, arrangement manners of the optical fibers 11 may be the same or may be different.

It may be understood that, in a same optical fiber layer 10, when the optical fibers 11 are arranged in the manners shown in FIG. 7(b) and FIG. 7(c), in a cross position of the two optical fibers 11, there is a region (corresponding to the region A3 and the region B3 in FIG. 4) that is of an outer surface of one optical fiber 11 and that faces the other optical fiber 11. In this case, the adhesive 12 may not cover the region.

For another example, in this embodiment, the adhesive 12 on surfaces of the optical fiber layers 10 is made of a same material. However, this application is not limited thereto. In another embodiment, the adhesive 12 on surfaces of the optical fiber layers 10 may be made of different materials.

For another example, in this embodiment, the plurality of optical fiber layers 10 are fixedly connected by using only the adhesive 12, to simplify the structure of the optical fiber board 1. However, this application is not limited thereto. In another embodiment, the optical fiber board may further include a fastening apparatus (for example, a fastening housing). The fastening apparatus is configured to further fasten each optical fiber layer.

This embodiment is further used to provide a manufacturing method of an optical fiber board 1. Before the manufacturing method is described, a fiber disposing device 6 (or a "fiber disposing machine") for manufacturing the optical fiber board 1 provided in this embodiment is first described. FIG. 8 is a diagram of an example structure of a fiber disposing device 6 according to an embodiment. With reference to FIG. 8, the fiber disposing device 6 includes a rack 61, a fiber spool wheel 62, and a fiber disposing wheel 63. Both the fiber spool wheel 62 and the fiber disposing wheel 63 are rotatively disposed on the rack 61 (rotation directions are shown by using arrows in FIG. 8). In a fiber disposing process, to-be-disposed optical fibers 11 sequentially pass through the fiber spool wheel 62 and the fiber disposing wheel 63 to reach a fiber disposing surface. Then, with rotation of the fiber disposing wheel 63, the optical fibers 11 may be disposed on the fiber disposing surface.

The rack 61 may move in a horizontal direction (an X1 direction shown in the figure) and a vertical direction (a Y1 direction shown in the figure) under control of a controller (not shown) of the fiber disposing device 6. Through movement in the horizontal direction, the rack 61 may drive the fiber disposing wheel 63 to dispose the optical fibers 11 on the fiber disposing surface according to a predetermined fiber disposing track. Through movement in the vertical direction, the rack 61 may drive the fiber disposing wheel 63 to move until there is a specified gap to the fiber disposing surface. In this way, the fiber disposing wheel 63 may apply downward pressure corresponding to the gap on the optical fibers 11 (a smaller gap indicates larger downward pressure).

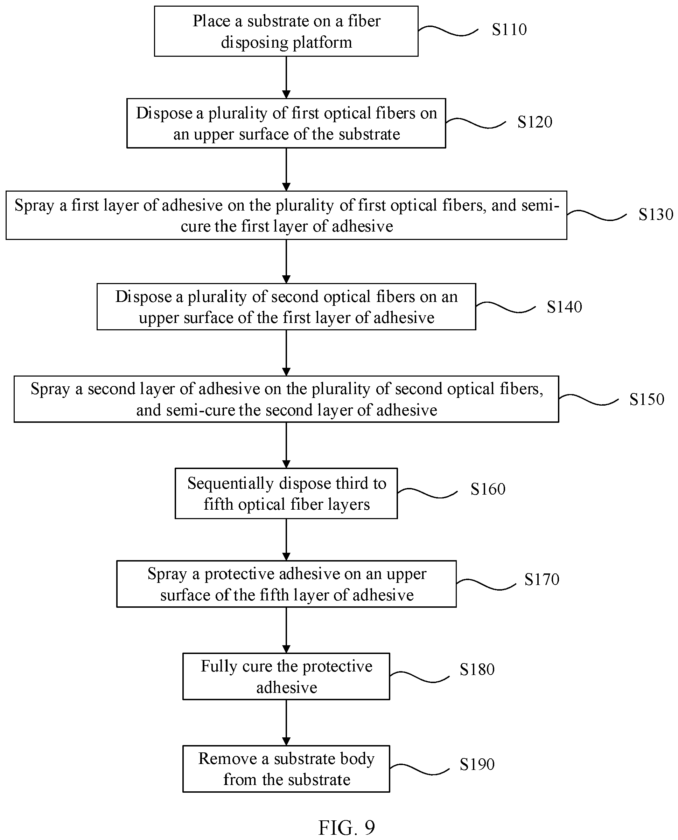

With reference to FIG. 9, the manufacturing method of the optical fiber board 1 provided in this embodiment includes the following steps:
S110: Place a substrate 20 on a fiber disposing platform.

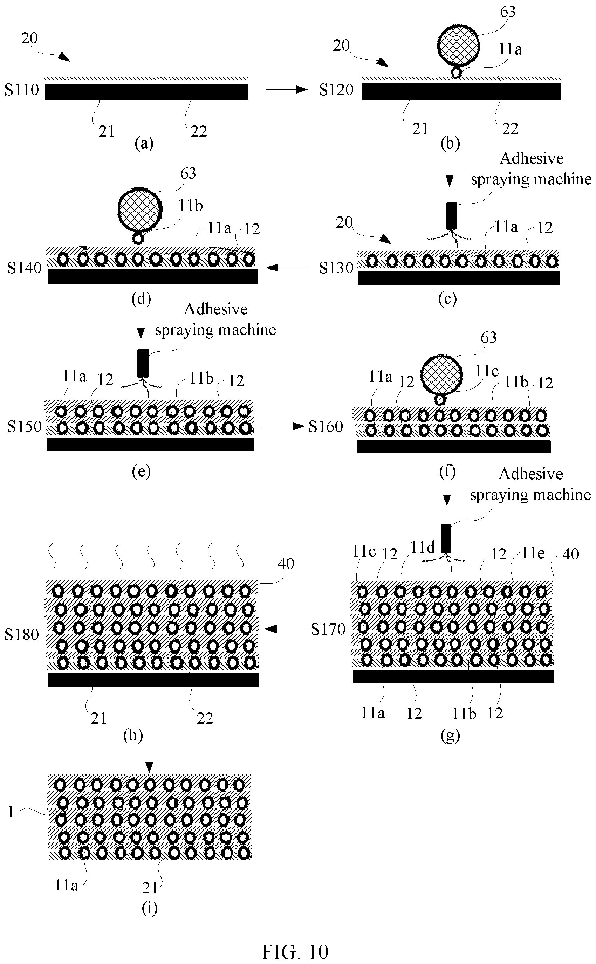

Refer to FIG. 10(a). The substrate 20 includes a substrate body 21 and a back adhesive 22 disposed on a surface of the substrate body 21 (in other words, the substrate 20 is a substrate with a back adhesive). The adhesive 22 may be configured to bond the to-be-disposed optical fibers 11. Generally, the substrate 20 with the back adhesive is a product that can be directly purchased. Therefore, a step of coating the substrate 20 with an adhesive layer may be omitted when the optical fibers 11 are disposed on the substrate 20 with the back adhesive, to improve efficiency of manufacturing the optical fiber board 1. In this embodiment, a material of the back adhesive 22 is a pressure-sensitive adhesive.

S120: Dispose the plurality of optical fibers 11a (used as first optical fibers) on an upper surface of the substrate 20.

Refer to FIG. 10(b). The fiber disposing wheel 63 is controlled to move along a preset fiber disposing track. The optical fibers 11 are disposed on the upper surface of the substrate 20 in a preset arrangement manner. In addition, a position of the fiber disposing wheel 63 is controlled in a vertical direction, so that a distance between the fiber disposing wheel 63 and the surface of the substrate 20 is slightly less than a diameter of the optical fiber 11. In this way, the fiber disposing wheel 63 may apply downward pressure to the optical fibers 11. Because a material of the adhesive 22 is a pressure-sensitive adhesive, the optical fibers 11 may be firmly bonded to a surface of the adhesive 22 through downward pressure applied by the fiber disposing wheel 63.

S130: Spray a first layer of adhesive 12 on surfaces of the plurality of optical fibers 11a, and semi-cure the first layer of adhesive 12.

Refer to FIG. 10(c). The first layer of adhesive 12 (or referred to as the "adhesive 12") is sprayed on the optical fibers 11a by using an adhesive spraying machine. For example, the adhesive 12 is a fast-cured pressure-sensitive adhesive (for example, an adhesive that can be semi-cured within one minute). In this way, after being sprayed onto the surfaces of the optical fibers 11a, the adhesive 12 can quickly reach a semi-cured state.

The following explains states of the adhesive in a curing process. The adhesive undergoes three states in the curing process. The three states are sequentially: a fluid state → a semi-cured state → a fully cured state. The "fluid state" of the adhesive is a state in which the adhesive does not have a fixed shape. To be specific, when the adhesive is in the fluid state, a part of the adhesive may flow relative to another part. When the adhesive is in the fluid state, the adhesive may be sprayed on a surface of another object (for example, the optical fiber 11).

The "fully cured state" of the adhesive is a state in which a shape of the adhesive is fully fixed. To be specific, when the adhesive is in the fully cured state, a form of the adhesive does not obviously change under external force. Generally, when the adhesive is in the fully cured state, an outer surface of the adhesive is no longer sticky.

The "semi-cured state" of the adhesive is a state between the fluid state and the fully cured state. In this case, the adhesive has a relatively stable shape, and has relatively good elasticity (in other words, prone to deformation under external force). When the adhesive is in the semi-cured state, the adhesive has good bonding performance.

A curing manner of the adhesive 12 is not limited in this application. For example, a curing form of the adhesive 12 may be heat curing or ultraviolet (UV) curing. In this embodiment, the curing form of the adhesive 12 is moisture-absorption curing. In this way, when no other curing device (for example, a UV lamp) is needed, the adhesive 12 can complete the curing process through absorbing water vapor in air, to simplify a process device of the optical fiber board 1.

Further, the first layer of adhesive 12 is sprayed on the optical fibers 11a in a flat surface form. In other words, the first layer of adhesive 12 not only covers the outer surfaces of the optical fibers 11, but also covers a gap region between the optical fibers 11. In addition, after the first layer of adhesive 12a is sprayed, an upper surface of the first layer of adhesive 12a is a horizontal surface. In this embodiment, the upper surface of the first layer of adhesive 12a needs to cover the upper surfaces of the optical fibers 11a. In other words, a layer thickness of the first layer of adhesive 12 is greater than a diameter of the optical fiber 11. In addition, when two optical fibers 11 cross (as shown in the arrangement manner in FIG. 7(b) or FIG. 7(c)), there is a region (corresponding to the region A3 and the region B3 in FIG. 4) that is of an outer surface of one optical fiber 11 and that faces the other optical fiber 11. In this case, the adhesive 12 may not cover the region.

S140: Dispose the plurality of optical fibers 11b (used as second optical fibers) on the upper surface of the first layer of adhesive 12.

Refer to FIG. 10(d). The plurality of optical fibers 1 1b are disposed on the upper surface of the first layer of adhesive 12 according to a preset fiber disposing track by using the fiber disposing wheel 63. Because the adhesive 12 is a pressure-sensitive adhesive, the plurality of optical fibers 11b may be firmly bonded to the upper surface of the first layer of adhesive 12 under downward pressure of the fiber disposing wheel 63.

In addition, because the upper surface of the adhesive 12 is a horizontal surface, in a process of disposing the optical fibers 11b, there is a constant distance between the fiber disposing wheel 63 and the upper surface of the first layer of adhesive 12. Therefore, in the fiber disposing process, the fiber disposing wheel 63 may apply constant downward pressure to the surfaces of the optical fibers 11b.

S150: Spray a second layer of adhesive 12 on surfaces of the plurality of optical fibers 11b, and semi-cure the second layer of adhesive 12.

Refer to FIG. 10(e). According to the method in step S130, the second layer of adhesive 12 is sprayed on the surfaces of the plurality of optical fibers 11b. In other words, an operation method (for example, a manner of spraying the adhesive 12) in this step is substantially the same as that in step S130. Therefore, refer to the description of step S130. Details are not described again.

S160: Sequentially dispose third to fifth optical fiber layers 10. Specifically, with reference to FIG. 10(f), this step includes:
according to the method in step S120, disposing the plurality of optical fibers 11c (used as third optical fibers) on an upper surface of the second layer of adhesive 12;
according to the method in step S130, spraying a third layer of adhesive 12 on the plurality of optical fibers 11c;
according to the method in step S120, disposing the plurality of optical fibers 11d (used as fourth optical fibers) on an upper surface of the third layer of adhesive 12;
according to the method in step S130, spraying a fourth layer of adhesive 12 on the plurality of optical fibers 11d; and
according to the method in step S120, disposing the plurality of optical fibers 11e (used as fifth optical fibers) on the fourth layer of adhesive 12.

S170: Spray an adhesive 40 (namely, a protective adhesive 40) on surfaces of the plurality of optical fibers 11e.

Refer to FIG. 10(g). The adhesive 40 is sprayed on the surfaces of the plurality of optical fibers 11e by using an adhesive spraying machine. In this embodiment, the adhesive 40 is a heat-curing adhesive. On this basis, the adhesive 40 may be a pressure-sensitive adhesive. Similarly, a thickness of the adhesive 40 is greater than the diameter of the optical fiber 11, to cover the upper surfaces of the optical fibers 11e.

S180: Fully cure the adhesive 40.

Refer to FIG. 10(h). The entire optical fiber board 1 is placed in a heater. The heater heats the optical fiber board 1, to fully cure the adhesive 40. After the adhesive 40 is cured, the protective adhesive 40 (for example, dust-proof and moisture-proof) for protecting the optical fiber layer 10 may be formed. In this embodiment, an upper surface of the adhesive 40 forms an upper surface (as a second surface) of the optical fiber board 1.

S190: Remove the substrate body 21 from the substrate 20. With reference to FIG. 10(i), external force is applied on the substrate body 21, to strip the substrate body 21 from the back adhesive 22. In this embodiment, a material of the back adhesive 22 is a pressure-sensitive adhesive. The pressure-sensitive adhesive has a feature of not polluting a surface of a bonded object. Therefore, after the substrate body 21 is stripped from the back adhesive 22, a lower surface of the back adhesive 22 may be maintained as a flat surface. In this embodiment, after the substrate body 21 is stripped, the lower surface of the back adhesive 22 forms a lower surface (as a first surface) of the optical fiber board 1.

Through the foregoing method, the optical fiber board provided in this embodiment can be manufactured. It should be noted that the manufacturing method provided in this embodiment is an example description of the method for manufacturing an optical fiber board, and a person skilled in the art may make other variations.

For example, in this embodiment, the substrate body 21 is stripped from the back adhesive 22, to form the optical fiber board 1 without the substrate 20. In this way, the volume of the optical fiber board 1 can be further reduced, and the layout density of the optical fibers 11 in the optical fiber board 1 can be improved. However, this application is not limited thereto. In another embodiment, the substrate 20 may be alternatively reserved in the optical fiber board 1, to form the optical fiber board 1 with the substrate 20.

For another example, in this embodiment, in the spraying step (for example, steps S130 and S150) of the adhesive 12, the upper surface of the adhesive 12 is a flat surface. However, this application is not limited thereto. In another embodiment, the upper surface of the adhesive is a non-flat surface. For example, the adhesive 12 has a recessed part in a gap region between two optical fibers 11. In this embodiment, all parts of the adhesive 12 have a same layer thickness, and the adhesive spraying machine may spray the adhesive at a uniform speed, to improve efficiency of manufacturing the optical fiber board.

For another example, in this embodiment, the adhesive 12 and the adhesive 40 are different adhesives. This application is not limited thereto. In another embodiment, the adhesive 12 and the adhesive 40 may be a same adhesive, for example, each are a heat-curing pressure-sensitive adhesive. In this way, in the spraying step (for example, in steps S130 and S150) of the adhesive 12, the adhesive 12 may be semi-cured in a heating manner (for example, in an irradiation manner by using a heating lamp), to accelerate a semi-curing speed.

### Embodiment 2

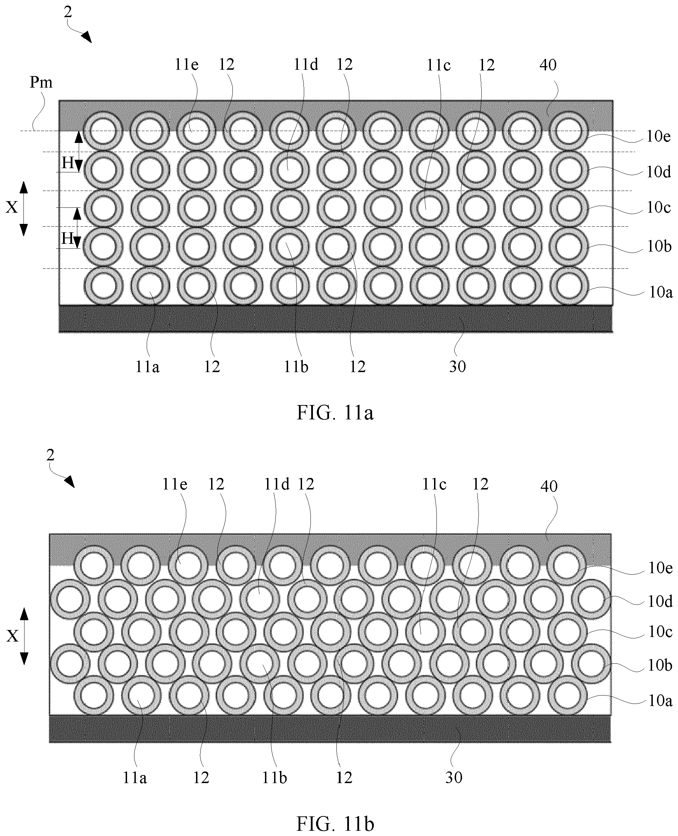

This embodiment is used to provide an optical fiber board. FIG. 11a is a diagram of an example structure of an optical fiber board 2 according to an embodiment. With reference to FIG. 11a, the structure of the optical fiber board 2 is basically the same as the structure of the optical fiber board 1 in Embodiment 1, and a difference is that the adhesive 12 does not fill the gap region between the optical fibers 11 in the same optical fiber layer but wraps an entire outer surface of the optical fibers 11 in this embodiment. In this way, for two optical fibers 11 that cross each other in a same layer, in addition to a region (corresponding to the region A1 and the region A2 of the optical fiber A in FIG. 4) that is of the optical fiber 11 and that faces an adjacent optical fiber layer 10, the adhesive 12 further covers a region (corresponding to the region A3 of the optical fiber A in FIG. 4) that is of the optical fiber 11 and that faces the optical fiber 11 in the current layer. Through this setting, when two optical fibers 11 in a same optical fiber layer 10 cross, the two optical fibers 11 may be bonded to each other by using the adhesive 12, to improve consistency of the optical fiber board 2.

In addition, because the adhesive 12 does not need to fill the gap between the optical fibers 11 in the same optical fiber layer 10, the adhesive 12 may not be a continuous solid structure, but may have a hollow part. Therefore, in this embodiment, a weight of the optical fiber board 2 can be reduced, to facilitate lightweight of the optical fiber board.

With reference to FIG. 11a, the adhesive 12 on a surface of each optical fiber layer 10 is bonded to the adhesive 12 on a surface of an adjacent optical fiber layer 10 (for example, the adhesive 12 on the surface of the optical fiber 11b is bonded to the adhesive 12 on the surface of the optical fiber 11c). In this way, the adhesive 12 may be used to implement a fixed connection between adjacent optical fiber layers 10. After adjacent optical fiber layers 10 are fixedly connected, the five optical fiber layers 10 can be fixedly connected.

In this embodiment, the optical fibers 11 in the same optical fiber layer 10 and/or adjacent optical fiber layers 10 are cross-connected by using the adhesive 12, to fixedly connect the five optical fiber layers 10. With an increase of the layout density of the optical fibers 11 in the optical fiber board 2, this helps further enhance connection firmness between the optical fibers 11.

In this embodiment, because the adhesive 12 is attached to the optical fiber 11, there may be a smaller distance H between adjacent optical fiber layers 10 than that in Embodiment 1. For example, the distance H (equivalent to a layer thickness of the optical fiber layer 10) between adjacent optical fiber layers 10 is 1.4 times to 2.2 times a diameter of the optical fiber 11. For example, when the diameter of the optical fiber 11 is 125 µm, the distance H between adjacent optical fiber layers 10 is 175 µm to 275 µm, for example, 175 µm, 200 µm, or 275 µm.

With reference to FIG. 11a, the protective adhesive 40 (used to form an upper cover of the five optical fiber layers 10) at least partially fills a gap between the optical fibers 11e in the optical fiber layer 10e. For example, the protective adhesive 40 fills a part that is of the gap (the gap between the optical fibers 11e) and that is located above a surface Pm of the optical fiber layer 10e. Therefore, the protective adhesive 40 may separate and fasten the optical fibers 11e. In this way, there is the fixed gap and a fixed relative position relationship between the optical fibers 11e, so that the optical fiber board 2 has a stable shape.

In addition, the optical fiber board 2 further includes a substrate 30 without a back adhesive. The substrate 30 is adjacent to and connected to the optical fiber layer 10a, to strengthen and protect structures of the optical fiber layers 10.

In addition, other disposing details (for example, a disposing manner of the protective adhesive 40 and an arrangement manner of the optical fibers 11 in each optical fiber layer 10) of the optical fiber board 2 are the same as those described in Embodiment 1. Therefore, refer to the description in Embodiment 1. Details are not described again.

In addition, the optical fiber board provided in this embodiment is an example description of the technical solutions of this application, and a person skilled in the art may make other variations. For example, in each optical fiber layer 10, in addition to outer surfaces of the optical fibers 11, the adhesive 12 may further cover a gap region between the optical fibers 11.

In addition, in this embodiment of this application, the optical fibers 11 in different optical fiber layers 10 may be disposed in an aligned manner along a thickness direction (an X direction shown in the figure) of the optical fiber board, or may be disposed in a staggered manner along a thickness direction of the optical fiber board. FIG. 11b shows an example in which the optical fibers 11 are disposed in the staggered manner in the X direction. With reference to FIG. 11b, the optical fibers 11 in adjacent optical fiber layers 10 are disposed in the staggered manner in the X direction. In this way, an upper-layer optical fiber 11 may be "supported" between two lower-layer optical fibers 11, to help implement a firm connection between optical fibers in adjacent layers.

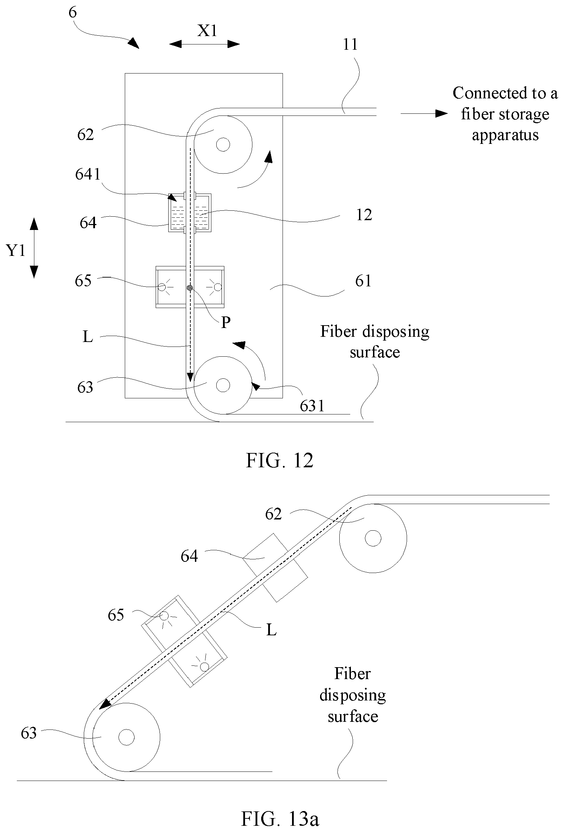

This embodiment is further used to provide a manufacturing method of an optical fiber board. Before the manufacturing method is described, a fiber disposing device 6 provided in this embodiment is still described first. FIG. 12 is a diagram of an example structure of a fiber disposing device 6 according to an embodiment. With reference to FIG. 12, in this embodiment, an adhesive box 64 and an ultraviolet lamp 65 (also referred to as a "UV lamp") are added based on the fiber disposing device 6 provided in Embodiment 1.

In this embodiment, a transport path of the optical fiber 11 between the fiber spool wheel 62 and the fiber disposing wheel 63 is referred to as a path L (a path represented by a dashed-line arrow in FIG. 12, used as a first path). In other words, in a fiber disposing process of the fiber disposing device 6, the to-be-disposed optical fiber 11 is transported from the fiber spool wheel 62 to the fiber disposing wheel 63 along the path L.

The adhesive box 64 includes a receptacle 641 configured to accommodate the adhesive 12. The receptacle 641 is located on the path L. In this way, when the to-be-disposed optical fiber 11 passes through the adhesive box 64 along the path L, the adhesive 12 in the adhesive box 64 may be attached to a surface of the optical fiber 11.

The UV lamp is disposed on one side of the path L. An ultraviolet ray emitted by the UV lamp may be irradiated at a point P on the path L. Along a transport direction of the optical fiber 11 (a direction indicated by the dashed-line arrow in FIG. 12), the point P is located downstream of a position of the receptacle 641 of the adhesive box 64. When the optical fiber 11 to which the adhesive 12 is attached passes through the point P, the ultraviolet ray emitted by the UV lamp may be irradiated at the adhesive 12 attached to the optical fiber 11, to semi-cure the adhesive 12. In FIG. 12, there is one UV lamp. However, this application is not limited thereto. In another embodiment, there may be a plurality of (for example, three) UV lamps, and the plurality of UV lamps are disposed around the point P to irradiate the adhesive 12 on the optical fiber 11 from different angles. Further, the plurality of UV lamps may be disposed in a sealed apparatus (the sealed apparatus may be referred to as a "UV oven"), to avoid light pollution caused by ultraviolet rays emitted by the UV lamps to a surrounding environment.

Further, a surface 631 that is of the fiber disposing wheel 63 and that is used to wind the to-be-disposed optical fiber 11 is an anti-adhesive surface that can avoid bonding of the adhesive 12. In other words, the surface 631 of the fiber disposing wheel 63 and the adhesive 12 are mutually exclusive. In this way, the optical fiber 11 whose surface is attached to the adhesive 12 is not bonded to the fiber disposing wheel 63. On this basis, a specific material of the surface 631 of the fiber disposing wheel is not limited in this embodiment, and may be specifically determined based on a property of the adhesive 12. For example, when the adhesive 12 and a metal material are mutually exclusive, the surface 631 of the fiber disposing wheel 63 may be disposed by using the metal material.

The fiber disposing device provided in this application is an example description of the technical solutions of this application, and a person skilled in the art may make other variations.

For example, in this embodiment, the fiber disposing wheel 63 is disposed right below the fiber spool wheel 62. In this way, the path L is a path extending along a vertical direction. However, this application is not limited thereto. In other embodiments, the path L may extend along another direction, for example, along a 45-degree oblique line (as shown in FIG. 13a).

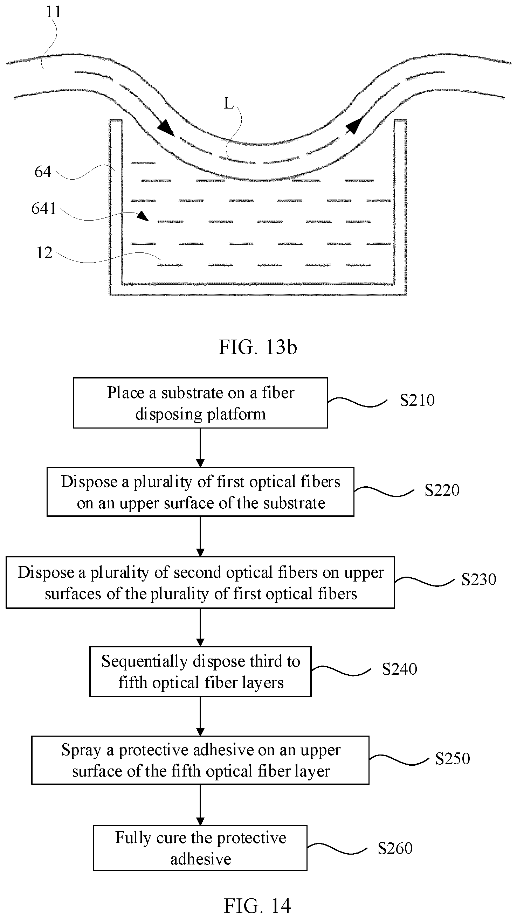

For another example, in this embodiment, the path L passes through the receptacle 641 of the adhesive box 64. However, this application is not limited thereto. In this application, the receptacle 641 is located on the path L, and the to-be-disposed optical fiber 11 can at least partially pass through the receptacle 641. For example, with reference to FIG. 13b, in another embodiment, the path L is a curve, an upper region of the receptacle 641 is located on the path L, a lower surface of the to-be-disposed optical fiber 11 can pass through the receptacle 641, and the adhesive 12 is attached to the lower surface. In a process of disposing the to-be-disposed optical fiber 11, the lower surface of the optical fiber 11 is bonded to a lower-layer optical fiber.

The following describes a manufacturing method of an optical fiber board provided in this embodiment. With reference to FIG. 14, the manufacturing method of an optical fiber board provided in this embodiment includes the following steps:

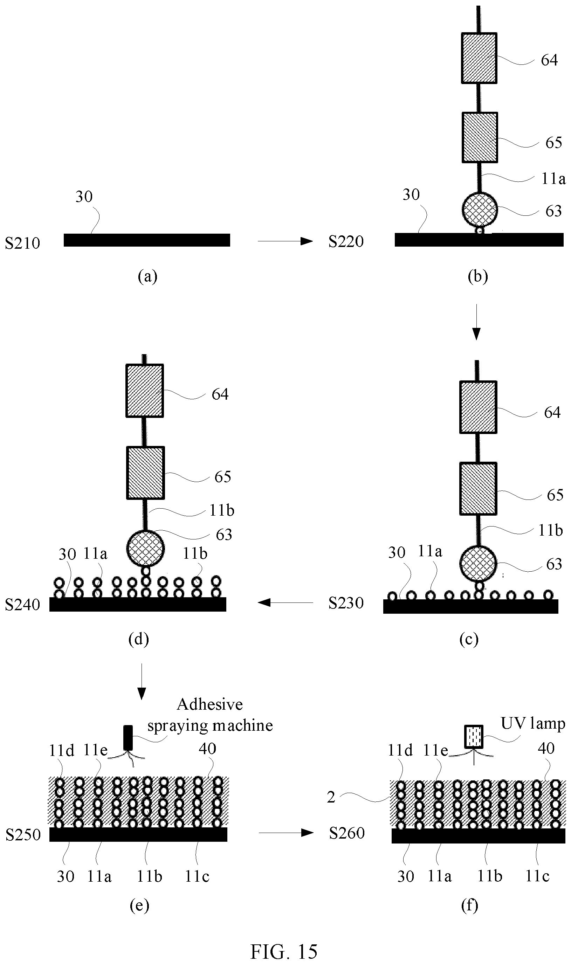

S210: With reference to FIG. 15(a), place a substrate 30 on a fiber disposing platform of the fiber disposing device 6. In this embodiment, the substrate 30 is a substrate without a back adhesive. For example, the entire substrate 30 is made of a same material (for example, a resin material).

S220: With reference to FIG. 15(b), dispose a plurality of optical fibers 11a (used as first optical fibers) on an upper surface of the substrate 30.

First, the to-be-disposed optical fibers 11 pass through the adhesive box 64 that accommodates the adhesive 12, so that the adhesive 12 is attached to surfaces of the optical fibers 11. Optionally, the surfaces of the optical fiber 11 have relatively high roughness, to facilitate stable attaching of the adhesive 12.

Then, when the optical fibers 11 whose surfaces are attached with the adhesive 12 pass through the point P, the ultraviolet lamp 65 is controlled to irradiate the adhesive 12 attached to the surfaces of the optical fibers 11. In this embodiment, the adhesive 12 is a photocuring pressure-sensitive adhesive. Therefore, under irradiation of the ultraviolet lamp 65, the adhesive 12 can be quickly semi-cured, to improve efficiency of disposing the optical fibers 11. In addition, a speed at which the adhesive 12 is semi-cured can be controlled through controlling the irradiation intensity of the ultraviolet lamp 65. This helps control a process of disposing the optical fibers 11.

Then, the optical fibers 11 whose surfaces are attached with the semi-cured adhesive 12 are disposed on the surface of the substrate 30 by using the fiber disposing wheel 63, to form an optical fiber layer 10a. For a process in which the optical fibers 11 are disposed by using the fiber disposing wheel 63, refer to the description in step S120 in Embodiment 1. Details are not described again.

S230: With reference to FIG. 15(c), dispose a plurality of optical fibers 11b (used as second optical fibers) on upper surfaces of the plurality of optical fibers 11a.

After the semi-cured adhesive 12 is attached to surfaces of the plurality of optical fibers 11b, the plurality of optical fibers 11b are sequentially disposed on the surfaces of the plurality of optical fibers 11a by using the fiber disposing wheel 63, to form an optical fiber layer 10b. A method for attaching the semi-cured adhesive 12 to the surfaces of the optical fibers 11b is the same as a method for attaching the semi-cured adhesive 12 to the surfaces of the optical fibers 11a. Details are not described again.

Because the semi-cured pressure-sensitive adhesive 12 is attached to the surfaces of the optical fibers 11b, the optical fibers 11b can be firmly bonded to the surfaces of the optical fibers 11a under downward pressure provided by the fiber disposing wheel 63. In this embodiment, in a process of disposing the optical fibers 11b, the adhesive 12 on the surfaces of the optical fibers 11a is in a semi-cured state. In this way, after the optical fibers 11a are disposed, the optical fibers 11b may be continuously disposed, to improve efficiency of disposing the optical fibers 11. However, this application is not limited thereto. In another implementation, the optical fibers 11b may be disposed after the optical fibers 11a are fully cured.

S240: With reference to FIG. 15(d), sequentially dispose third to fifth optical fiber layers 10. Details are as follows:

According to the method in step S230, a plurality of optical fibers 11c (used as third optical fibers) are disposed on the plurality of optical fibers 11b to form an optical fiber layer 10c.

According to the method in step S230, a plurality of optical fibers 11d (used as fourth optical fibers) are disposed on the plurality of optical fibers 11c to form an optical fiber layer 10d.

According to the method in step S230, a plurality of optical fibers 11e (as fifth optical fibers) are disposed on the plurality of optical fibers 11d to form an optical fiber layer 10e.

S250: Spray the adhesive 40 on surfaces of the optical fibers 11e. With reference to FIG. 15(e), the adhesive 40 is sprayed on upper surfaces of the optical fibers 11e by using an adhesive spraying machine, and an upper surface of the adhesive 40 covers the upper surfaces of the optical fibers 11e. Optionally, the upper surface of the adhesive 40 is a horizontal surface, so that the optical fiber board 2 has a regular appearance. In addition, the adhesive 40 may penetrate downward to partially or fully fill a gap between the optical fibers 11e in the optical fiber layer 10e. Therefore, the adhesive 40 may separate and fasten the optical fibers 11e. In this way, there is the fixed gap and a fixed relative position relationship between the optical fibers 11e, so that the optical fiber board has a stable shape.

S260: Fully cure the adhesive 40. With reference to FIG. 15(f), the adhesive 40 is a photocuring adhesive 12. In this way, the adhesive 40 can be quickly and fully cured through irradiation of a UV lamp. In addition, in an irradiation process of the UV lamp, the adhesive 12 attached to the optical fibers 11 may also be fully cured.

The foregoing describes a manufacturing method of an optical fiber board provided in this embodiment. The manufacturing method provided in this embodiment is an example description of the technical solutions of this application, and a person skilled in the art may make other variations.

For example, in this embodiment, the adhesive 12 is a photocuring adhesive. In this way, the adhesive 12 can be quickly cured/semi-cured under irradiation of the ultraviolet lamp 65. However, this application is not limited thereto. In another embodiment, the adhesive 12 may be another type of adhesive, for example, a heat-curing adhesive.

For another example, in this embodiment, after a layer of optical fibers (for example, the optical fibers 1 1a) is disposed, a next layer of optical fibers (for example, the optical fibers 1 1b) is directly disposed above the layer of optical fibers 11, to improve optical fiber layout efficiency. However, this application is not limited thereto. In another embodiment, after a layer of optical fibers (for example, the optical fibers 11a) is disposed, the adhesive may be sprayed on the layer of optical fibers, and the adhesive covers a gap region between the optical fibers. Then, a next layer of optical fibers 11 (for example, the optical fibers 11b) is disposed. In this embodiment, the adhesive is used to fill a gap region between optical fibers in a same optical fiber layer, to help improve structural stability of the optical fiber board.

### Embodiment 3

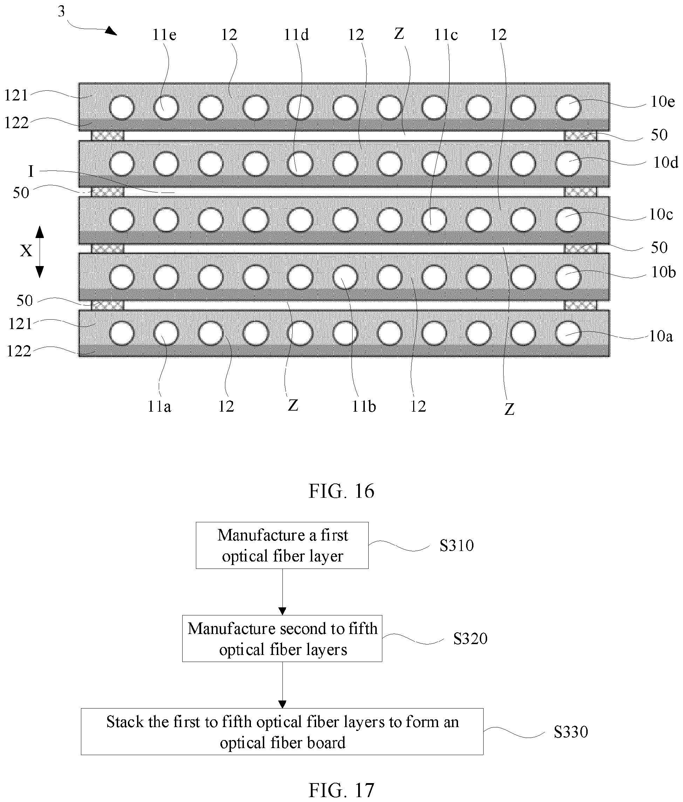

This embodiment is used to provide an optical fiber board. FIG. 16 is a diagram of an example structure of an optical fiber board 3 according to an embodiment. With reference to FIG. 16, the structure of the optical fiber board 3 is basically the same as the structure of the optical fiber board 1 in Embodiment 1, and a difference is that the adhesive 12 on the surfaces of the optical fiber layers 10 is not bonded but there is a gap Z in this embodiment. In other words, in this embodiment, adjacent optical fiber layers 10 are not fixedly connected to each other by using the adhesive 12.

In this embodiment, adjacent optical fiber layers 10 are connected to each other by using a solid-state adhesive product (for example, a double-sided tape 50, that is used as an example of a second connecting part). With reference to FIG. 16, a plurality of optical fibers 11 in a same optical fiber layer 10 are fixedly connected to each other by using the adhesive 12 (as an example of a first connecting part). The double-sided tape 50 (as an example of the second connecting part) is disposed between every two adjacent optical fiber layers 10. Pressure-sensitive adhesive layers are disposed on both upper and lower surfaces of the double-sided tape 50. In this way, the adhesive 12 on the surfaces of the adjacent optical fiber layers 10 may be fixedly connected by using the double-sided tape 50, so that the adjacent optical fiber layers 10 are fixedly connected by using the double-sided tape 50. After the adjacent optical fiber layers 10 are fixedly connected, the five optical fiber layers 10 can be fixedly connected.

In this way, the optical fiber layers 10 in the optical fiber board 3 may be independently and synchronously manufactured. After the optical fiber layers 10 are manufactured, the plurality of optical fiber layers 10 are fixedly connected by using the double-sided tape 50. In this way, relatively high manufacturing efficiency can be implemented for the optical fiber board 3. Further, because the solid-state adhesive product is usually a product that can be directly purchased, the efficiency of manufacturing the optical fiber board structure can be further improved, and the manufacturing costs of the optical fiber board structure can be reduced.

In addition, because the solid-state adhesive product (for example, the double-sided tape 50) has a specific volume and rigidity, the solid-state adhesive product disposed between adjacent optical fiber layers 10 may separate and connect the adjacent optical fiber layers 10. In addition, the adjacent optical fiber layers 10 may support each other by using the solid-state adhesive product, to ensure that the optical fiber board 3 has a stable shape.

It may be understood that a gap (that is, a gap I) between the adhesive 12 on the surfaces of the adjacent optical fiber layers 10 is caused through disposing the double-sided tape 50. On this basis, there may be no other entity gap between the adhesive 12 on the surfaces of the adjacent optical fiber layers 10. In this way, the optical fiber board 3 may have only a possibly small volume, to improve optical fiber layout density in the optical fiber board 3.

With reference to FIG. 16, in each optical fiber layer 10, the adhesive 12 covering outer surfaces of the optical fibers 11 includes two different types of adhesives 12, respectively an adhesive 121 covering upper parts of the optical fibers 11 and an adhesive 122 covering lower parts of the optical fibers 11. For example, the adhesive 121 and the adhesive 122 may be pressure-sensitive adhesives with two different marks. In addition, a manner of disposing the optical fiber layers 10 (for example, an arrangement manner of the optical fibers 11) is the same as the manner of disposing the optical fiber layers 10 in Embodiment 1. Details are not described herein again.

The optical fiber board provided in this embodiment is an example description of the technical solutions of this application, and a person skilled in the art may make other variations.

For example, in this embodiment, the optical fiber layers 10 are fixedly connected by using the double-sided tape 50, to simplify the structure of the optical fiber board 3. However, this application is not limited thereto. For example, in another embodiment, the optical fiber layers 10 may be connected by using a clamping mechanism (as an example of a second connecting part) disposed outside the five optical fiber layers 10, for example, a hoop or a clamping housing disposed outside the five optical fiber layers 10, provided that the five optical fiber layers 10 can be fixedly connected. In this embodiment, after the optical fiber layers 10 are independently manufactured, the five optical fiber layers 10 are clamped by using the clamping mechanism. In other words, a fixed connection between the five optical fiber layers 10 can be implemented, to improve efficiency of manufacturing the optical fiber board.

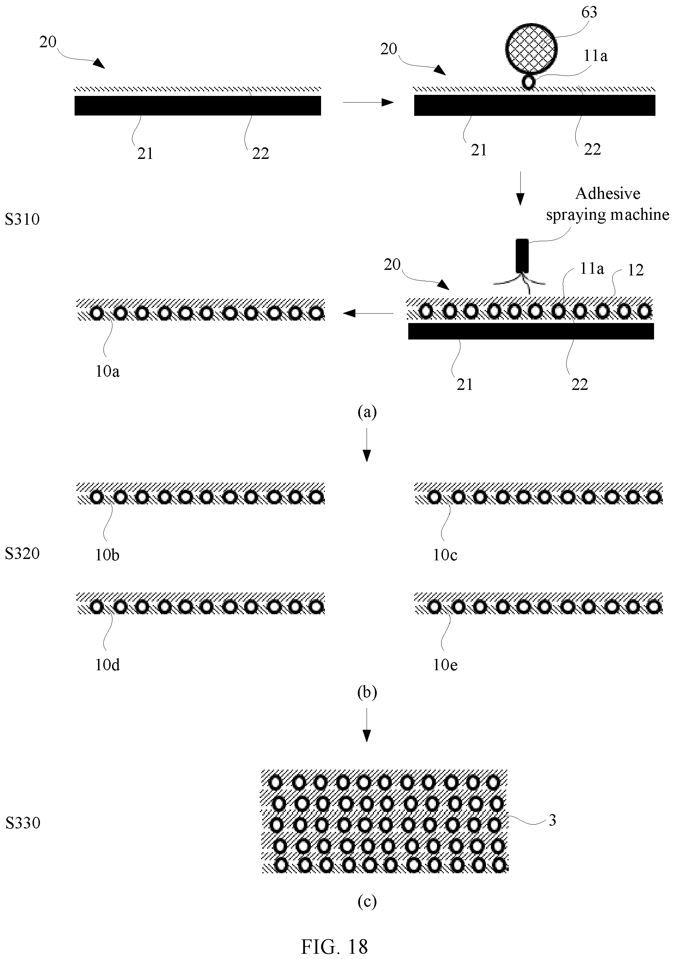

This embodiment is further used to provide a manufacturing method of an optical fiber board. With reference to FIG. 17, the manufacturing method of an optical fiber board provided in this embodiment includes the following steps:
S310: With reference to FIG. 18(a), manufacture an optical fiber layer 10a.

First, a substrate 20 is placed on a fiber disposing platform. The substrate 20 is a substrate with a back adhesive.

Then, a plurality of optical fibers 11a (used as first optical fibers) are disposed on an upper surface of the substrate 20 by using a fiber disposing wheel 63.

Then, a substrate body 21 is stripped from the adhesive 22 to form the optical fiber layer 10a.

S320: With reference to FIG. 18(b), manufacture optical fiber layers 10b to 10e. According to the method in step S310, second to fifth optical fiber layers 10 are respectively manufactured.

S330: With reference to FIG. 18(c), stack the optical fiber layers 10a to 10e to form the optical fiber board 3. Specifically, the optical fiber layers 10a to 10e are sequentially bonded by using the double-sided tape 50 to form the optical fiber board 3.

The manufacturing method of an optical fiber board provided in this embodiment is an example description of the technical solutions of this application, and a person skilled in the art may make other variations. For example, in this embodiment, the optical fiber layers are sequentially manufactured. However, this application is not limited thereto. In another embodiment, the plurality of optical fiber layers may be manufactured in parallel, to improve efficiency of manufacturing the optical fiber board.

## Claims

1. An optical fiber board structure, used for an optical fiber connection between optical communication boards or used for an optical fiber connection between an optical chip on an optical communication board and an optical connector, wherein the optical fiber board structure comprises:
M optical fiber layers, wherein the M optical fiber layers are stacked along a thickness direction of the optical fiber layers; each optical fiber layer comprises a plurality of optical fibers; every two of the plurality of optical fibers are arranged side by side, or at least some optical fibers are arranged in a cross manner; and M is a positive integer greater than or equal to 2.

2. The optical fiber board structure according to claim 1, wherein the optical fiber board structure further comprises a connecting part; and any two adjacent layers in the M optical fiber layers are fixedly connected by using the connecting part, or any two optical fibers in a same optical fiber layer are fixedly connected by using the connecting part.

3. The optical fiber board structure according to claim 2, wherein the connecting part is a first adhesive material, and the first adhesive material fills a gap between the optical fibers in the M optical fiber layers; or
the first adhesive material wraps outer surfaces of the optical fibers in the M optical fiber layers, so that optical fibers in a same optical fiber layer and optical fibers in adjacent optical fiber layers are fixedly connected.

4. The optical fiber board structure according to claim 1, wherein the connecting part comprises a first connecting part and a second connecting part, a plurality of optical fibers in a same optical fiber layer are fixedly connected by using the first connecting part, and different optical fiber layers are fixedly connected by using the second connecting part.

5. The optical fiber board structure according to claim 4, wherein the first connecting part is a first adhesive material.

6. The optical fiber board structure according to claim 5, wherein the second connecting part is a solid-state adhesive product disposed between adjacent optical fiber layers; and
the second connecting part is a clamping mechanism disposed outside the M optical fiber layers.

7. The optical fiber board structure according to claim 3 or 5, wherein the first adhesive material is a pressure-sensitive adhesive.

8. The optical fiber board structure according to any one of claims 1 to 7, wherein the optical fiber board structure further comprises an upper cover, the upper cover is adj acent to and connected to an M^{th} optical fiber layer in the M optical fiber layers, and the upper cover at least partially fills a gap between optical fibers in the M^{th} optical fiber layer.

9. The optical fiber board structure according to claim 8, wherein a material of the upper cover is a second adhesive.

10. A manufacturing method of an optical fiber board structure, comprising:
disposing a plurality of first optical fibers on a first surface of a substrate;
coating the plurality of first optical fibers with a first layer of first adhesive material, wherein the first layer of first adhesive material covers upper surfaces of the plurality of first optical fibers; and
disposing a plurality of second optical fibers on the first layer of first adhesive material, and bonding the plurality of second optical fibers to the first layer of first adhesive material.

11. The manufacturing method according to claim 10, wherein the coating the plurality of first optical fibers with a first layer of first adhesive material comprises:
coating the plurality of first optical fibers with the first layer of first adhesive material in a form of forming an upper surface of the first adhesive material as a horizontal surface.

12. The manufacturing method according to claim 10, wherein the first adhesive material is a pressure-sensitive adhesive, and the bonding the plurality of second optical fibers to the first layer of first adhesive material comprises:
disposing the plurality of second optical fibers on the first layer of first adhesive material in a semi-cured state of the first layer of first adhesive material; and
in a process of disposing the plurality of second optical fibers, applying a downward pressure to the plurality of second optical fibers, so that the plurality of second optical fibers are bonded to the first layer of first adhesive material.

13. The manufacturing method according to claim 10, wherein the manufacturing method further comprises:
coating a plurality of N^{th} optical fibers with an N^{th} layer of first adhesive material, wherein the N^{th} layer of first adhesive material covers upper surfaces of the plurality of N^{th} optical fibers; and
disposing a plurality of (N+1)^{th} optical fibers on the N^{th} layer of first adhesive material, and bonding the plurality of (N+1)^{th} optical fibers to the N^{th} layer of first adhesive material, wherein N is a positive integer that is sequentially obtained from 2 to M-1 in ascending order, and M is a positive integer greater than or equal to 3.

14. The manufacturing method according to claim 13, wherein after the bonding the plurality of (N+1)^{th} optical fibers to the N^{th} layer of first adhesive material, the method further comprises:
disposing a second adhesive on the plurality of (N+1)^{th} optical fibers, wherein the second adhesive covers upper surfaces of the plurality of (N+1)^{th} optical fibers.

15. The manufacturing method according to claim 10, wherein the first surface of the substrate is a pressure-sensitive adhesive layer covering a substrate body of the substrate, and the method further comprises:
stripping the substrate body of the substrate from the pressure-sensitive adhesive layer of the substrate.

16. A manufacturing method of an optical fiber board structure, comprising:
disposing, on a first surface of a substrate, a plurality of first optical fibers whose surfaces are covered by a first adhesive material; and
disposing, on the plurality of first optical fibers, a plurality of second optical fibers whose surfaces are covered by the first adhesive material, and bonding the plurality of second optical fibers to the plurality of first optical fibers by using the first adhesive material on the surfaces of the first optical fibers and the first adhesive material on the surfaces of the second optical fibers.

17. The manufacturing method according to claim 16, wherein the first adhesive material is a photocuring adhesive, and the disposing, on a first surface of a substrate, a plurality of first optical fibers whose surfaces are covered by a first adhesive material comprises:
passing the plurality of first optical fibers through an adhesive box accommodating a liquid-state first adhesive material, so that the first adhesive material is attached to the surfaces of the plurality of first optical fibers;
irradiating, by using an ultraviolet ray, the liquid-state first adhesive material attached to the surfaces of the plurality of first optical fibers, so that the liquid-state first adhesive material is semi-cured; and
disposing, on the first surface of the substrate, the plurality of first optical fibers whose surfaces are attached with the semi-cured first adhesive material.

18. The manufacturing method according to claim 16, wherein the disposing, on the plurality of first optical fibers, a plurality of second optical fibers whose surfaces are covered by the first adhesive material comprises:
disposing the plurality of second optical fibers on the plurality of first optical fibers, when the first adhesive material on the surfaces of the plurality of first optical fibers is in a cured or semi-cured state, and the first adhesive material on the surfaces of the plurality of second optical fibers is in the semi-cured state.

19. The manufacturing method according to claim 16, wherein the manufacturing method further comprises:
disposing, on a plurality of N^{th} optical fibers, a plurality of (N+1)^{th} optical fibers whose surfaces are covered by the first adhesive material, and bonding the plurality of (N+1)^{th} optical fibers to the plurality of N^{th} optical fibers by using the first adhesive material on the surfaces of the N^{th} optical fibers and the first adhesive material on the surfaces of the (N+1)^{th} optical fiber, wherein N is a positive integer that is sequentially obtained from 2 to M-1 in ascending order, and M is a positive integer greater than or equal to 3.

20. The manufacturing method according to claim 16, wherein the first adhesive material is a pressure-sensitive adhesive, and the method further comprises:
stripping the substrate from the plurality of first optical fibers.

21. A manufacturing method of an optical fiber board structure, comprising:
separately forming each of M optical fiber layers, wherein M is a positive integer greater than or equal to 2, and each of the M optical fiber layers comprises a plurality of first optical fibers that are laid on a plane, and an adhesive covering outer surfaces of the plurality of first optical fibers; and
fixedly connecting the M optical fiber layers by using a fastening apparatus.

22. The manufacturing method according to claim 21, wherein the separately forming each of M optical fiber layers comprises: forming an N^{th} optical fiber layer, wherein N is a positive integer that is obtained from 1 to M in ascending order; and
the forming an N^{th} optical fiber layer comprises:
disposing a plurality of N^{th} optical fibers on a first surface of a substrate, wherein the first surface of the substrate is a pressure-sensitive adhesive layer covering a substrate body of the substrate;
coating the plurality of N^{th} optical fibers with a first adhesive material, wherein the first adhesive material covers upper surfaces of the plurality of N^{th} optical fibers; and
stripping a substrate body of the substrate from the pressure-sensitive adhesive layer of the substrate to form the N^{th} optical fiber layer.

23. An optical fiber interconnection board, wherein the optical fiber interconnection board comprises a substrate and the optical fiber board structure according to any one of claims 1 to 9; or comprises an optical fiber board structure obtained by using the manufacturing method of an optical fiber board structure according to any one of claims 9 to 22; and
the substrate is adjacent to and connected to a first optical fiber layer in M optical fiber layers of the optical fiber board structure.

24. The optical fiber interconnection board according to claim 23, wherein the substrate comprises a back adhesive layer, and the substrate is adjacent to and connected to the first optical fiber layer by using the back adhesive layer.

25. An optical communication device, wherein the optical communication device comprises the optical fiber board structure according to any one of claims 1 to 9, or comprises the optical fiber interconnection board according to claim 23 or 24.

26. A fiber disposing device, comprising:
a rack;
a fiber spool wheel and a fiber disposing wheel that are disposed on the rack, wherein the fiber spool wheel and the fiber disposing wheel are configured to wind a to-be-disposed optical fiber; and in a fiber disposing process of the fiber disposing device, the to-be-disposed optical fiber is transported from the fiber spool wheel to the fiber disposing wheel along a first path; and
an adhesive box, wherein the adhesive box comprises an adhesive receptacle, and the adhesive receptacle is disposed on the first path, so that the to-be-disposed optical fiber at least partially passes through the adhesive receptacle when being transported along the first path.

27. The fiber disposing device according to claim 26, wherein the first path passes through the adhesive receptacle.

28. The fiber disposing device according to claim 26, wherein the adhesive receptacle is configured to accommodate a first adhesive material, and a surface that is of the fiber disposing wheel and that is used to wind the to-be-disposed optical fiber is an anti-adhesive surface that can avoid bonding of the first adhesive material.

29. The fiber disposing device according to claim 26, wherein the fiber disposing device further comprises:
an ultraviolet lamp, wherein the ultraviolet lamp is configured to irradiate an ultraviolet ray at a first position on the first path; and along a transport direction of the to-be-disposed optical fiber, the first position is located downstream of a position of the adhesive receptacle.
